(19) Europäisches Patentamt
European Patent Office
Office européen des brevets

(11) Veröffentlichungsnummer: **0 122 501**
**B1**

# (12) EUROPÄISCHE PATENTSCHRIFT

(45) Veröffentlichungstag der Patentschrift: **14.01.87**

(51) Int. Cl.⁴: **C 01 G 37/08,** C 14 C 3/06

(21) Anmeldenummer: **84103084.4**

(22) Anmeldetag: **21.03.84**

## (54) Verfahren zur Herstellung basischer Chrom-Aluminium-Sulfate.

(30) Priorität: **22.03.83 DE 3310270**

(43) Veröffentlichungstag der Anmeldung: **24.10.84 Patentblatt 84/43**

(45) Bekanntmachung des Hinweises auf die Patenterteilung: **14.01.87 Patentblatt 87/3**

(84) Benannte Vertragsstaaten: **BE CH DE FR GB IT LI NL**

(56) Entgegenhaltungen:
**DE-A-2 303 213**
**GB-A-251 267**

**Chemical Abstracts Band 86, Nr. 14, 4. April 1977, Columbus, Seite 184, Spalte 1, Abstract Nr. 92659y**
**Chemical Abstracts Band 91, Nr. 22, 26. November 1979, Columbus, Ohio, USA L. I. DEVYATOVSKAYA et al. "Study of methods for the use of spent sulfuric acid - waste of phloroglucinol production", Seite 114, Spalte 1, Abstract Nr. 177351v**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Ostertag, Werner, Dr., Oberer- Bergel-Weg 2, D-6718 Gruenstadt (DE)**
Erfinder: **Wienand, Henning, Dr., Kornstrasse 64 a, D-6831 Neulussheim (DE)**
Erfinder: **Lach, Dietrich, Dr., Gartenweg 16, D-6701 Friedelsheim (DE)**
Erfinder: **Hahn, Erwin, Dr., Am Buechsenackerhang 31, D-6900 Heidelberg (DE)**

**EP 0 122 501 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Vorliegende Erfindung betrifft ein Verfahren zur Herstellung von in kaltem Wasser löslichen basischen Chrom-Aluminium-Sulfaten der allgemeinen Formel

$Cr_xAL_{2-x}\,(OH)_{2y}\,(SO_4)_{3-y}.\ n\ H_20,$

in der x = 0,1 - 1,9, y = 0,01 -2 und n = 4 - 24 bedeuten,

Bei vielen chemischen Synthesen, bei denen mit Chromsäure (Chrom-VI-)oxydiert wird, fallen chrom(III)-haltige Abfallschwefelsäuren an, deren Entsorgung zu einem Problem geworden ist. Solche chrom-III-haltigen Abfallschwefelsäuren fallen z.B. auch bei der Beseitigung biologisch schwer abbaubarer chemischer Substanzen durch Oxidation mit Chromsäure an.

Bislang wurde bei der Entsorgung von chromfreien Abfallschwefelsäuren so vorgegangen, daß diese entweder mit Natronlauge oder Kalk neutralisiert wurden, oder durch Eindampfen z.B. nach dem Tauchflammemverfahren wieder aufkonzentriert wurden. Beide Wege sind nicht unproblematisch. Der erstere bringt Salzbelastungen für das Abwasser bzw. die Notwendigkeit, Gips zu deponieren, mit sich. Der zweite ist energieintensiv und wird nicht selten durch Verunreinigungen in der Abfallschwefelsäure zusätzlich erschwert.

Bei der Entsorgung von chrom-III-haltigen Abfallschwefelsäuren muß durch zusätzliche Arbeitsgänge das Chrom abgetrennt werden, wobei man z.B. so vorgeht, daß die Abfallsäuren mit Kalkmilch versetzt werden, der gefällte Gips abfiltriert, die chromhaltige Restlösung eingeeingt und schließlich sprühgetrocknet wird. Es versteht sich von selbst, daß ein derartiges Verfahren mit hohen Kosten verbunden ist.

In der britischen Patentschrift 251 267 ist ein Verfahren zur Herstellung von basischen Chromsalzen beschrieben, bei denen diese Salze mit Oxiden, Hydroxiden oder Salzen von Erdalkalimetallen, Zink, Magnesium oder Aluminium kombiniert sind. Die Herstellung dieser Salze erfolgt durch Umsetzen der wäßrigen, sauren Chromsalzlösungen mit Verbindungen der anderen gewünschten Komponenten. Die Salze können als Gerbstoffe eingesetzt werden.

Der vorliegenden Erfindung lag die Aufgabe zugrunde, ein Verfahren zur Herstellung von basischen Chrom-Aluminiumsulfaten aus chromhaltigen Abfallschwefelsäuren zu entwickeln bei dem keine Koppel- oder Nebenprodukte und bei dem keine Abwasserprobleme und keine zu deponierenden Abfallprodukte anfallen.

Es wurde gefunden, daß diese Aufgabe bei einem Verfahren zur Herstellung von wasserlöslichen basischen Chrom-Aluminium-Sulfaten der allgemeinen Formel

$Cr_xAl_{2-x}\,(OH)_{2y}\,(SO_4)_{3-y}\ n\ H_2O$

in der x = 0,1 - 1,9,

y = 0,01 - 2 und

n = 4 - 24

bedeuten, durch Umsetzung von Chrom(III)-haltigen Schwefelsäure mit Aluminiumoxiden und/oder -hydroxiden, dadurch gelöst wird, daß man in diesen chromhaltigen Schwefelsäuren den Wassergehalt auf Werte von 20 bis 50 Gew.% einstellt, anschließend einen Überschuß an Aluminiumoxid und/oder -oxidhydrat und/oder Aluminiumhydroxid zugibt, der, bezogen auf die Formel $M_2(SO_4)_3$ in der M = Al und Cr sind, das $M/SO_4$-Molverhältnis um mindestens 0,01 Mol übersteigt, die Mischung bei Temperaturen von 100 bis 200°C umsetzt, und das Schmelzprodukt nach Überführung in Tröpfchenform im freien Fall erstarren läßt.

Für die erfindungsgemäße Herstellung der basischen Chrom-Aluminium-sulfate kann man aus Chromsalzen, wie löslichem Chromsulfat, Aluminiumhydroxid und/oder -oxidhydrat und/oder -oxid und Schwefelsäure ausgehen. Sie werden zweckmäßig aber aus chromhaltigen Abfallschwefelsäuren hergestellt.

Die bei dem erfindungsgemäßen Verfahren erhaltene Verbindung

$Cr_xAl_{2\ x}\,(OH)_{2y}\,(SO_4)_{3-y}.\ nH_2O$ ist eine homogene Verbindung, die gegenüber Mischungen aus basischem Chrom- und Aluminiunsulfat eine einheitliche Farbe, ein spezifisches Schmelzverhalten und eine spezifische Löslichkeit z.B. in $H_20$ aufweist. Für die Verwendung der erfindungsgemäß hergestellten basischen Chrom/Aluminiumsulfate als Gerbstoff ist besonders die Löslichkeit in kaltem Wasser von Interesse, die mit Mischungen aus basischem Chrom(III)-sulfat und basischem Aluminium(III)-sulfat bei vergleichbaren Bedingungen geringer ist. Dem Fachmann ist bekannt, daß Kaltlöslichkeit eine der wichtigsten Eigenschaften eines Gerbstoffes ist.

Zur Herstellung von Produkten mit einem spezifischen Chrom/Al-Gehalt and mit einer spezifischen Basizität wird je nach der gewünschten Zusammensetzung des basischen Chrom-Aluminium-Sulfates soweit erforderlich, in der chromhaltigen Abfallschwefelsäure das $Cr^{+++}/SO_4$-Molverhältnis eingestellt. Dies kann erfolgen durch Zugabe von $Cr^{+3}$-Salzen oder durch Zugabe von Schwefelsäure. Zweckmäßig anschließend wird der Wassergehalt auf 20 bis 50 Gew.% eingestellt und Aluminiumoxid und/oder Aluminiumoxidhydrat und/oder Aluminiumhydroxid mit der Lösung zur Reaktion gebracht. Bei Chromsäureoxidationen in der organischen Chemie fallen i.a. Abfall-Lösungen an, die 2,5 bis 5,0 Gew.% $Cr^{3+}$, 60 bis 70 Gew.% $S0_4$ und 30 bis 40 Gew.% $H_2O$ enthalten.

Wenn man basische Chrom-Aluminium-Sulfate mit einem wesentlich höheren Chromgehalt herstellen will, ist man, um nach dem erfindungsgemäßen Verfahren vorzugehen, auf Abfallsäuren mit höherem Chromgehalt und bzw. einem geringeren Schwefelsäuregehalt angewiesen. Derartige chromreiche Abfallsäuren lassen sich z.B. erhalten, indem bereits chromhaltige Abfallsäure erneut mit Chromsäure versetzt und für eine Chromsäureoxidation verwendet wird.

Außerdem können chrom-III-reiche und schwefelsäurearme Abfallsäuren dann anfallen, wenn biologisch schwer abbaubare organische Verbindungen in Abfallschwefelsäuren durch Oxidation mittels Chromtrioxid

entsorgt werden. Bei biologisch schwer abbaubaren Verbindungen handelt es sich beispielsweise um ein- oder mehrkernige aromatische Verbindungen, die chloriert, sulfoniert und/oder nitriert bzw. amidiert vorliegen. Derartige Verbindungen, wie z.B. 1-Chlor-5-nitro-toluolsulfosäure oder entsprechende Isomere lassen sich in Schwefelsäure bei erhöhter Temperatur, d.h. durch Kochen mit Chromsäure vollständig zerstören, wobei der Schwefelsäuregehalt der Lösung meist 45 bis 50 % beträgt. Bei dieser Chromsäureoxidation von biologisch schwer abbaubaren Verbindungen wird der organische Kohlenstoff zu $CO_2$ und Chlorid zu $Cl_2$ oxidiert. $NO_2$- bzw. $SO_3H$-Gruppen werden in Stickoxide und Schwefelsäure überführt. Chrom-III-haltige Abfallschwefelsäure bleibt zurück. Die flüchtigen Gase wie $CO_2$, $Cl_2$, $N_2$ oder Stickstoffoxide können nach bekannten Verfahren über Wäschen beseitigt werden.

Hierbei fallen Abfallsäuren mit im allgemeinen höheren Chromgehalten bis zu etwa 15 Gew.% und niedrigeren Sulfatgehalten von bis herab zu 45 Gew.% an. Im allgemeinen kann man daher sagen, daß die in der Technik anfallenden chromhaltigen Abfallsäuren einen Chromgehalt von 2,5 bis 15 Gew.%, einen Sulfatgehalt von 45 bis 70 Gew.% und einen Wassergehalt von 30 bis 40 Gew.% aufweisen.

Die Menge der zuzusetzenden Aluminiumverbindung wird, was die Obergrenze anbetrifft, entsprechend der maximalen Löslichkeit von $Al(OH)_3$, AlOOH oder $\gamma$-$Al_2O_3$ in der Abfallsäure bemessen. Die Minimalmenge liegt um mindestens 0,01 Mol.% über der Menge, die zur Bildung des Sulfates der allgemeinen Formel $M_2(SO_4)_3$, (M = $Cr^{+++}$ und $Al^{+++}$) stöchiometrisch erforderlich ist. Da Gerbstoffe möglichst basisch eingestellt sein sollen, wird man bei der Herstellung hochwertiger Gerbstoffe die Obergrenze des Al-Gehaltes anstreben.

Die Einstellung des Wassergehaltes auf Werte von 20 bis 50 % ist aus Gründen einer guten Produktlöslichkeit, einer raschen Produktsolidifikation beim Abkühlen und eines hohen prozentualen Wertgehaltes des Produktes geboten. Zweckmäßigerweise wird der Wasserhalt bereits durch Abdestillieren oder Zugabe von Wasser bei der Abfallsäure eingestellt. Die Einstellung des Wassergehaltes kann allerdings auch nach der Umsetzung mit der Aluminiumverbindung vorgenommen werden.

Nachdem in einer Vorlage die Ausgangssubstanzen, Abfallsäure und z.B. Aluminiumhydroxid homogen gemischt sind, wird die Suspension in einen Hydrothermalreaktor gepumpt, in dem das Gemisch bei Temperaturen zwischen 100 und 200°C zur Reaktion gebracht wird. Die Umsetzung ist exotherm, was bedeutet, daß die Suspension bei Erwärmung auf eine gewisse Schwellentemperatur z.B. 60°C unter Wärmeentwicklung durchreagiert, wobei in der Regel ohne Wärmezufuhr Temperaturen über 100°C erreicht werden. Die Reaktionszeit ist bei Temperaturen über 100°C sehr kurz, sie beträgt beispielsweise bei 140°C nur wenige Minuten. Die Umsetzung wird in Hydrothermalreaktoren, wie z.B. Röhrenreaktoren durchgeführt.

Nach beendeter Umsetzung liegt das Reaktionsprodukt als viskose Lösung im eigenen Kristallwasser vor. Diese Lösung wird so verarbeitet, daß sie z.B. über eine Düse in feine Tröpfchen überführt und diese im freien Fall beim Abkühlen verfestigt werden. Um die Verfestigungszeit bzw. die Fallhöhe zu verringern, kann man das Reaktionsprodukt vor dem Versprühen so weit abkühlen, daß die Temperatur knapp oberhalb der Kristallisationstemperatur liegt, die im allgemeinen 90 bis 130°C beträgt. Bereits das Abkühlen des Reaktionsproduktes während des freien Falles um wenige Grade unterhalb der Kristallisationstemperatur genügt, damit das Reaktionsprodukt das vorhandene Wasser als Kristallwasser abbindet und sich verfestigt.

Erwähnenswert ist, daß bei dem erfindungsgemäßen Verfahren eine geringe Natriumkonzentration, die beispielsweise vom Einsatz von Natriumdichromat anstelle von Chromsäure bei der Chromsäureoxidation herrührt, nicht stört. Das in der Abfallsäure vorhandene Natriumsulfat liegt später in dem Produkt zugemischt vor, stört dessen Wirksamkeit jedoch nicht. Organische Verunreinigungen, die im Gerbstoff zu einer Vergrauung des Leders führen können, lassen sich problemlos durch Zusatz einer äquivalenten Menge Chromtrioxid oxidieren, wobei der gesamte organische Kohlenstoff in $CO_2$ überführt und die VI-wertigen Chromionen zu III-wertigen reduziert werden.

Die erhaltenen kombinierten basischen Chrom-Alumimium-Sulfate können als Gerbstoffe eingesetzt werden.

Die erfindungsgemäßen kombinierten Chrom-Aluminium-Gerbstoffe haben den Vorteil, daß sie aus einem an sich wertlosen Abfallprodukt, nämlich chromhaltigen Abfallschwefelsäuren hergestellt werden können, deren Beseitigung bzw. Entsorgung bisher mit hohen Kosten verbunden war. Bemerkenswerterweise fallen keinerlei Nebenprodukte, Koppelprodukte oder Abfallprodukte an und es müssen noch nicht einmal Restlösungen entsorgt werden. Die Abfallsäuren, die sich somit praktisch restlos verwerten lassen, sichern den neuen Produkten eine äußerst preisgünstige Rohstoffbasis. Gegenüber reinen Chromgerbstoffen haben die erfindungsgemäßen Verbindungen den Vorteil, daß sie infolge ihres geringeren Chrom-Gehaltes die Chrombelastung der Abwässer von Gerbereien verringern.

Eine der wichtigsten Eigenschaften, die die erfindungsgemäßen wasserlöslichen basischen Chrom- und Aluminiumsulfate aufweisen müssen, ist eine hohe Kaltlöslichkeit. Darunter versteht man hohe Löslichkeitswerte des Gerbstoffes in Wasser bei Raumtemperatur in möglichst kurzer Zeit.

Als Testbedingung wird der Chrom- und Aluminiumgehalt der Lösung ermittelt, der sich bei 20°C in 30 min maximal einstellt.

Die Versuche zeigten, daß das erfindungsgemäß hergestellte Cr/Al-Produkt je nach Cr/Al-Verhältnis bis zur doppelten Kaltlöslichkeit, in allen Fällen aber eine höhere Kaltlöslichkeit, aufweist wie eine mechanisch hergestellte Mischung aus Chrom- und Aluminiumgerbstoffen. Besonders gute Löslichkeiten zeigen erfindungsgemäße Verbindungen der oben genannten Formel, mit x Werten über 0,2.

**Beispiel 1**

In mehreren 16-1-Autoklaven, die über Steigleitungen Verbindungen zur selben Zerstäuberdüse haben, werden pro 16-1-Reaktionsgefäß je 10 kg Chrom(3+)haltige Abfallschwefelsäure vorgelegt. Die Abfallsäure, die bei der Indanthren-Herstellung anfällt, hat folgende analytische Zusammensetzung.

$Cr^{3+}$: 3,2 Gew.%
Na: 1,4 Gew.%
$SO_4^{2-}$ 62,6 Gew.%
$H_2O$: 32,5 Gew.%

Zur vorgelegten Säure werden bei Raumtemperatur 3000 g $Al(OH)_3$ gegeben. Die Reaktionsgefäße werden jeweils verschlossen und unter Rühren auf 80°C aufgeheizt. Die ablaufende Reaktion ist exotherm, das Reaktionsgemisch erwärmt sich auf 125°C und wird weitere 15 Minuten lang bei 140°C gehalten. Anschließend werden bei einem jeweiligen Kesseldruck von 6 bar die Kessel nacheinander über eine Zweistoffdüse (Druckluftzerstäuber 15 bar) entleert. Dabei wird das Reaktionsgemisch in feine Tröpfchen über geführt, die im freien Fall (Fallhöhe 1,5 m) erstarren. Bei dieser quasi kontinuierlichen Fahrweise fällt das chromhaltige basische Aluminiumsalz in fester, feinteiliger Form an und hat folgende analytische Zusammensetzung:

$Cr^{3+}$: 2,5 Gew.% $\hat{=}$ 3,65 % $Cr_2O_3$
Al: 8,3 Gew.% $\hat{=}$ 15,60 % $Al_2O_3$
Na: 1,1 Gew.%
$SO_4^{2-}$ 51,0 Gew.%
OH; $H_2O$: 37,1 Gew.%
entsprechend der Formel:
$(Cr_{0,26}Al_{1,74})(OH)_{0,16}(SO_4)_{2,92} \cdot 8,3\ H_2O, + 0,06\ Na_2SO_4$
Löslichkeit: bei 25°C löst sich 1 g Substanz in 1 ml $H_2O$.

**Beispiel 2**

Durch Wiederverwendung der Abfallsäure aus Beispiel 1 bei einer erneuten $Cr^{6+}$-Oxidation fällt eine Abfallsäure folgender Zusanmensetzung an:

$Cr^{3+}$: 9,1 Gew.%
Na: 3,8 Gew.%
$SO_4^{2-}$: 43,3 Gew.%
$H_2O$: 43,8 Gew.%

Von dieser Säure werden 10 050 g in einem 16-1-Autoklaven mit 650 g $Al(OH)_3$ umgesetzt. Der Kessel wird auf 120°C aufgeheizt und das Reaktionsgemisch 30 Minuten lang gerührt. Anschließend kühlt man auf 100°C ab, entspannt und destilliert aus dem Kessel 1750 ml $H_2O$ ab, um die Viskosität des Reaktionsproduktes zu erhöhen. Das zähviskose Produkt wird dann mit 10 bar über ein beheiztes Steigrohr aus dem Kessel gedrückt und mittels Zweistoffdüse und (15 bar Druckluft an der Düse) verdüst. Das in feine Tröpfchen übergeführte Produkt wird im freien Fall (Fallhöhe 1,5 m) verfestigt. Das Produkt fällt in fester Form an, ist sehr gut wasserlöslich und hat folgende analytische Zusammensetzung:

$Cr^{3+}$: 10,7 Gew.% $\hat{=}$ 15,6 % $Cr_2O_3$
Al: 2,7 Gew.% $\hat{=}$ 5,1 % $Al_2O_3$
Na: 4,4 Gew.%
$SO_4^{2-}$: 50,5 Gew.%
OH, $H_2O$: 31,7 Gew.%,
entsprechend der Formel:
$(Cr_{1,34}Al_{0,66})(OH)_{0,36}(SO_4)_{2,82} \cdot 11,4\ H_2O + 0,62\ Na_2SO_4$

Der erhaltene Gerbstoff wird zur Gerbung von entkälkter Rindsblöße eingesetzt. Hierzu werden in einem Gerbfaß 100 Teile entkälkter Rindsblöße (Spaltstärke 3 mm) bei 22°C in 50 Teilen Wasser, das 5 Teile Natriumchlorid, 0,7 Teile Ameisensäure 85 %ig und 0,4 Teile Schwefelsäure 96 %ig enthält, gepickelt. Nachdem 90 Minuten gewalkt worden war, weist die Pickelflotte einen pH-Wert von 3,5 auf. In diese Flotte werden nun 10 Teile des oben hergestellten Gerbstoffs gegeben. Anschließend wird 2 Stunden lang gewalkt und dann der pH-Wert mit 1 Teil Natriumformiat und 1 Teil Natriumbicarbonat innerhalb einer Stunde auf pH 3,9 angehoben. Bei diesem pH-Wert wird noch weitere 4 Stunden gewalkt.

Die erhaltenen Leder besitzen eine Schrumpfungstemperatur von 97°C und zeichnen sich durch eine helle Eigenfarbe aus.

**Beispiel 3**

Eine Abfallschwefelsäure, die einen schwer abbaubaren Kohlenwasserstoff auf Basis 1-Chlor-5-nitro-toluolsulfonsäure enthält, wird zunächst durch Umsetzung mit Chromsäure in eine $Cr^{3+}$-haltige

Abfallschwefelsäure umgewandelt. Hierzu werden 5000 g der Abfallsäure mit der Zusammensetzung
Kohlenstoff gesamt: C: 2,7 Gew.%
$N_2$: 0,4 Gew.%
Cl: 1,2 Gew.%
$SO_4^{2-}$: 56,4 Gew.%
$H_2O$: 39,3 Gew.%
mit 1495 g $CrO_3$ umgesetzt. Die Abfallsäure wird in einem Reaktionsgefäß mit intensivem Rückflußkühler zunächst auf 50 bis 60°C erwärmt und dann die Chromsäure portionsweise über einen Zeitraum von 2 Stunden zugegeben. Das gut gerührte Reaktionsgemisch erwärmt sich dabei auf 125 bis 130°C und siedet am Rückfluß. Nach Eintrag der Chromsäure wird eine weitere Stunde am Rückfluß gekocht. Nach der Umsetzung zeigt die $Cr^{3+}$-haltige Abfallsäure folgende Zusammensetzung:
$Cr^{3+}$: 11,7 Gew.%
Kohlenstoff gesamt: C: 0,015 Gew.%
$SO_4^{2-}$: 47,25 Gew.%
$H_2O$: Rest
5000 g Abfallsäure der angegebenen Zusammensetzung werden in einem 16-1-Autoklaven vorgelegt. Dazu gibt man 750 g $Al(OH)_3$. Der Kessel wird verschlossen, auf 140°C aufgeheizt und das Reaktionsgemisch 3 Minuten lang bei dieser Temperatur gerührt. Anschließend erhöht man den Kesseldruck mittels Druckluft auf 15 bar, preßt das zähe Reaktionsprodukt über ein Steigrohr zur Düse, wo es mit 20 bar Druckluft versprüht und im freien Fall (Fallhöhe 1,5 m) zur Erstarrung gebracht wird. Das feste Sprühgut ist wasserlöslich und zeigt folgende analytische Zusammensetzung:
Al: 4,8 Gew.% ≙ 9,02 % $Al_2O_3$
$Cr^{3+}$: 11,2 Gew.% ≙ 16,35 % $Cr_2O_3$
$SO_4^{2-}$: 45,2 Gew.%
OH, $H_2O$: 38,8 Gew.%
entsprechend der Formel:
$(Cr_{1,1}Al_{0,9})\,(OH)_{1,2}\,(SO_4)_{2,4}\cdot 10,8\,H_2O$
Der erhaltene Gerbstoff wird, wie in Beispiel 2 angegeben, zur Gerbung von entkälkter Rindsblöße eingesetzt. Man erhält kochgares Leder.

**Beispiel 4**

Verglichen wird die Kaltlöslichkeit des Produktes aus Beispiel 3 (A) mit einem durch Abmischen aus basischem Chromsulfat und basischem Aluminiumsulfat hergestellten Produkt (B).
A) 6 g basisches Chrom/Aluminiumsulfat Beispiel 3
Gehalt an Cr: 0,672 g
Gehalt an Al: 0,288 g
B) Vergleichsprobe, hergestellt durch Vermischen von a) 2,46 g basischem Aluminiumsulfat der Zusammensetzung:
Al: 11,9 Gew.%
$SO_4^{-2}$: 44,2 Gew.%
OH, $H_2O$: 43,9 Gew.%
mit b) 3,77 g basischem Chromsulfat der Zusammensetzung:
Cr: 17,8 %
$SO_4$: 50,4 %
OH, $H_2O$: 31,8 %
Die Mischung (6,23 g) hat folgende Zusammensetzung:
Cr: 0,67 g
Al: 0,29 g
Von Probe A) und B) werden jeweils 6 g in 5 ml $H_2O$ gegeben und beide Proben bei Raumtemperatur (20°C) 30 Minuten lang geschüttelt und anschließend filtriert, der Rückstand getrocknet und gewogen.
Von Probe A) haben sich in diesem Zeitraum 5,66 g, vom Probe B) dagegen nur 2,55 g gelöst.

**Beispiel 5**

Verglichen wird die Kaltlöslichkeit des Produktes aus Beispiel 1 (A) mit einem durch Abmischen aus basischem Chromsulfat und basischem Aluminiumsulfat hergestellten Produkt (B)
A) 5 g basisches Chrom/Aluminiumsulfat Beispiel 1
Gehalt an Cr: = 0,125 g
Al: = 0,415 g
B) Vergleichsprobe, hergestellt durch Vermischen von 3,48 g basischem Aluminiumsulfat der

Zusammensetzung:
Al: 11,9 Gew.%
$SO_4^{-2}$. 44,2 Gew.%
OH, $H_2O$: 43,9 Gew.%
mit 0,7 g basischem Chromsulfat der Zusammensetzung:
Cr: 17,8 %
$SO_4$: 50,4 %
OH, $H_2O$: 31,8 %
Die Mischung (4,18 g) hat folgende Zusammensetzung:
Cr: 0,125 g
Al: 0 415 g
Von Probe A) und B) wird die maximale Löslichkeit in Wasser bei Raumtemperatur während eines Zeitraumes von 30 ermittelt. Von Probe A) haben sich in diesem Zeitraum 1,02 g/ml, von Probe B) dagegen nur 0,92 g/ml gelöst.

Auch die IR-Spektren der beiden Produkte unterscheiden sich voneiander. Während das Produkt gemäß 5A) (entsprechend Beispiel 1) im IR-Spektrogramm (KBr-Preßling) einen sehr starken Peak bei einer Wellenlänge von 1102 $cm^{-1}$ aufweist, weist das durch mechanische Mischung hergestellte Produkt gemäß 5B) einen Doppelpeak bei den Wellenlängen 1113 und 1079 $cm^{-1}$ auf.

**Patentansprüche**

1. Verfahren zur Herstellung von wasserlöslichen basischen Chrom-Aluminium-Sulfaten der allgemeinen Formel
$Cr_xAl_{2-x} (OH)_{2y} (SO_4)_{3-y}$ n $H_20$
in der x = 0,1 - 1,9,
y = 0,01 - 2 und
n = 4 - 24
bedeuten, durch Umsetzung von Chrom(III)-haltiger Schwefelsäure mit Aluminiumoxiden und/oder -hydroxiden, dadurch gekennzeichnet, daß man in diesen chromhaltigen Schwefelsäuren den Wassergehalt auf Werte von 20 bis 50 Gew.% einstellt, anschließend einen Überschuß an Aluminiumoxid und/oder -oxidhydrat und/oder Aluminiumhydroxid zugibt, der, bezogen auf die Formel $M_2(SO_4)_3$ in der M = Al und Cr sind, das M/$SO_4$-Mol-verhältnis um mindestens 0,01 Mol übersteigt, die Mischung bei TTemperaturen von 100 bis 200° C umsetzt, und das Schmelzprodukt nach Überführung in Tröpfchenform im freien Fall erstarren läßt.

2. Verfahren nach Anspruch 1, dadurch gekennzeichnet, daß man das schmelzflüssige Reaktionsprodukt vor der Überführung in Tröpfchenform auf Temperaturen knapp oberhalb seines Erstarrungspunktes abkühlt.

3. Verfahren nach Ansprüchen 1 und 2, dadurch gekennzeichnet, daß man chromhaltige Abfallsäuren verwendet.

**Claims**

1. A process for the preparation of a water-soluble basic chromium aluminum sulfate of the general formula
$Cr_xAl_{2-x} (OH)_{2y}. (SO_4)_{3-y}$. n $H_2O$,
where
x is from 0.1 to 1.9,
y is from 0.01 to 2, and
n is from 4 to 24,
by reacting chromium(III)-containing sulfuric acid with aluminum oxides and/or hydroxides, wherein the water content of the said chromium-containing sulfuric acid is brought to 2o to 50% by weight, after which aluminum oxide and/or aluminum oxide hydroxide and/or aluminum hydroxide are added in an amount which, based on the formula $M_2(SO_4)_3$, where M is Al and Cr, exceeds a molar ratio of M to $SO_4$ by not less than 0.01 mole, the mixture is reacted at from 100 to 200°C, and the molten product is converted into droplet form and then allowed to solidity in free fall.

2. A process as claimed in claim 1, wherein the molten reaction product is cooled to just above its solidification point before being converted into droplet form.

3. A process as claimed in claims 1 and 2, wherein chromiumcontaining waste acids are used.

**Revendications**

1. Procédé peur la preparation de sulfates de chrome-aluminium basiques solubles dans l'eau, de formule générale

$Cr_xAl_{2-x}(OH)_{2y}\cdot(SO_4)_{3-y}\,n\,H_2O$

dans laquelle x = 0,1 - 0,9,

y = 0,01 - 2 et

n = 4 - 24,

par réaction d'acide sulfurique contenant du chrome(III) avec des oxydes et/ou hydroxydes d'aluminium, caractérisé en ce qu'en règle, dans ces acides sulfuriques contenant du chrome, la teneur en eau a des valeurs de 20 à 50 % en poids, on ajoute ensuite un excès d'oxyde et/ou d'hydrate d'oxyde et/ou d'hydroxyde d'aluminium, excès qui, par rapport à la formule $M_2(SO_4)_3$ dans laquelle M = Al et Cr, dépasse le rapport molaire M/SO, d'au moins 0,01 mol, on fait réagir le mélange à une température de 100 à 200°C et en laisse le produit en fusion se solidifier en chute libre après l'avoir transformé sous forme de gouttelettes.

2. Procédé selon la revendication 1, caractérisé en ce qu'avant de le transformer sous forme de gouttelettes, on refroidit le produit liquide en fusion de la réaction à une température se situant juste au-dessus de son point de solidification.

3. Procédé selon la revendication 1 ou 2, caractérisé en ce qu'on utilise des acides résiduaires contenant du chrome.